# EUROPEAN PATENT APPLICATION

(11) **EP 1 538 061 A2**
(43) Date of publication of application: **08.06.2005**
(21) Application number: 04380215.6
(22) Date of filing: 29.10.2004
(51) Int. Cl.: B62B 7/04, B62B 9/00, B62B 9/08, B62B 9/16

(54) **An infant pushchair wheel support**

(30) Priority: 02.12.2003 ES 200302776 U
(71) Applicant: JANE, Sociedad Anonima, 08184 Palau de Plegamans, Barcelona (ES)
(72) Inventor: Jane Santamaria, Manuel, Jane, S.A., 08184 Palau de Plegamans (Barcelona) (ES)
(74) Representative: Pastells Teixido, Manuel

(57) **Abstract**

This support is particularly designed for the front wheel of a three-wheeled pushchair and is characterised in that it is made up by an arm being laterally arranged with respect to the wheel, said arm being upperly elbowed above said wheel and having a mudguard solidly attached to the lower end of said elbowed portion. This lateral arm has an appendage to which the active portion of a disc brake is solidly attached, said active portion being apt to be actuated by a rope passing through the inside of said arm and emerging through a hole of said arm to thereupon engage said active portion of the brake. The lower end of the lateral arm comprises the control belonging to the means allowing to remove the wheel from the corresponding axle.

## Description

### OBJECT OF THE INVENTION

The invention relates to an infant pushchair wheel support.

### BACKGROUND OF THE INVENTION

Some models of foldable pushchairs have been already known for years which comprise only three wheels, i.e. two back ones and a central front one being in some cases a castoring wheel.

This very applicant is the holder of the Spanish Utility Model No. 200202189 (ES-1052792) having as its object an infant pushchair of the above mentioned type having features improving the makeup of the forward lower portion where the castoring wheel is to be arranged.

### SUMMARY OF THE INVENTION

It is the object of this invention to improve the front wheel arrangement by simplifying its support and providing it with a mudguard and means allowing to better arrange the active portion of the disc brake belonging to said wheel.

The support has for such a purpose been made up as an only arm being laterally arranged with respect to the wheel, said arm being upperly elbowed above said wheel and having the mudguard solidly attached to the lower end of this elbowed portion.

Said lateral arm has been provided with an appendage to which the active portion of the disc brake is solidly attached, said brake being actuated by a rope passing through the inside of said arm and emerging through a hole of said arm to thereupon engage said active portion of the brake.

These and other characteristics will be best made apparent by the following detailed description whose understanding will be made easier by the accompanying sheet of drawings showing a practical embodiment being cited only by way of example not limiting the scope of the present invention.

### DESCRIPTION OF THE DRAWINGS

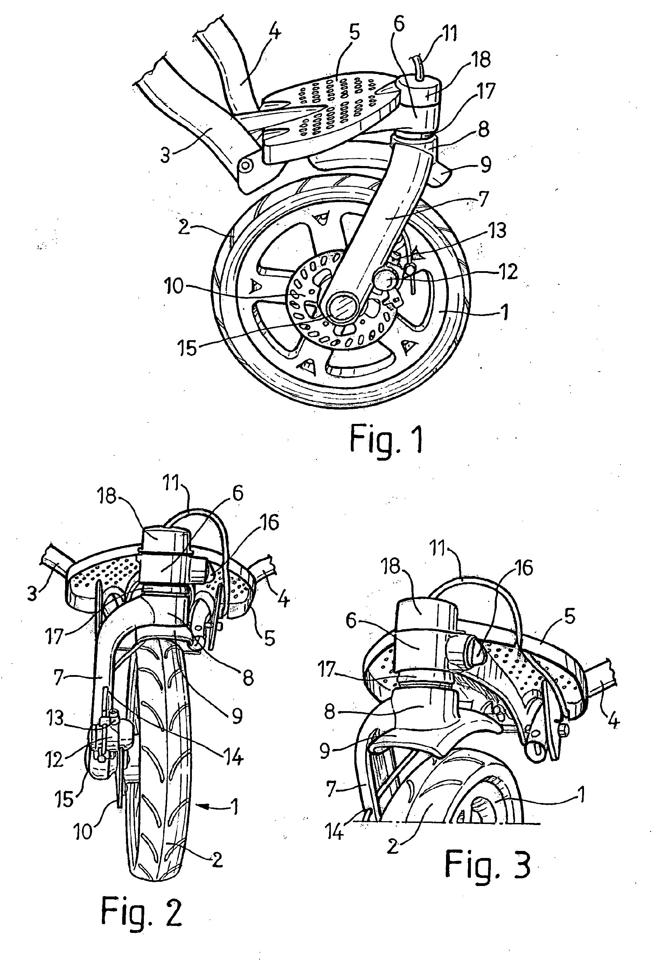

Fig. 1 in a perspective view illustrates the forward lower portion of a pushchair comprising the wheel support being the object of this invention;
Fig. 2 is a front view of the wheel and its support; and
Fig. 3 is a close perspective view showing the upper portion of said support.

### DETAILED DESCRIPTION

According to the drawings the infant pushchair comprises a front wheel (1) being provided with a pneumatic tyre (2) and fitted to the lower portion of the converging front legs (3) and (4) by means of a footrest (5) at its forward portion having an extension (6) being vertically bored thus forming the passage allowing to fit the pin being integral with the support to which the wheel is fitted.

This support is characteristically made up by an arm (7) being laterally arranged with respect to the wheel (1), said arm being upperly elbowed (at 8) above said wheel and having a mudguard (9) solidly attached to the lower end of said elbowed portion.

The wheel (1) has disc-braking means (10) being actuated by a rope (11), the active portion (12) of the brake being solidly attached to a forwardly arranged appendage (13) of the arm (7), the rope (11) passing through the inside of said arm and emerging therefrom through a hole (14) to thereupon engage said active portion (12).

A control (15) belonging to the means allowing to remove the wheel (1) from the corresponding axle is laterally arranged at the lower end of said arm (7).

The rotation of the pin being integral with the elbow (8) of said arm (7) can be locked by means of a lock being provided with an outer, lateral control (16), said pin being arranged at the extension (6) of the footrest and for such a purpose being provided with bearings being duly protected by covers (17) and (18).

The invention within its essentiality can practically be carried out in other ways of embodiment differing only in detail from the one shown herein only as a way of example and to which will also reach the protection now being sought after. This infant pushchair wheel support can thus be manufactured in any shape or size with the most suitable means and materials, the component elements can be replaced by others technically equivalent because all this is included within the claims.

## Claims

1. An infant pushchair wheel support being particularly designed for the front wheel (1) of a three-wheeled pushchair, **characterised in that** it is made up by an arm (7) being laterally arranged with respect to the wheel (1), said arm being upperly elbowed (at 8) above said wheel and having a mudguard (9) solidly attached to the lower end of said elbowed portion.

2. An infant pushchair wheel support as per claim 1, **characterised in that** the lateral arm (7) has an appendage (13) to which the active portion (12) of a disc brake (10) is solidly attached, said active portion being apt to be actuated by a rope (11) passing through the inside of said arm (7) and emerging through a hole (14) of said arm to thereupon engage said active portion (12) of the brake.

3. An infant pushchair wheel support as per claim 1, **characterised in that** the lower end of the lateral arm (7) comprises the control (15) belonging to the means allowing to remove the wheel (1) from the corresponding axle.
